# EUROPEAN PATENT SPECIFICATION

(11) **EP 4 037 521 B1**
(45) Date of publication and mention of the grant of the patent: **03.07.2024**
(21) Application number: 20797537.6
(22) Date of filing: 29.09.2020
(51) Int. Cl.: A45C 13/00, G06Q 10/08, A45C 13/28, G07C 9/00, A45C 15/00, A45C 13/18, E04B 2/82, E05D 15/26, E06B 7/20, G06K 19/077, G07C 9/20

(54) **A SECURITY DEVICE FOR LUGGAGE**
SICHERHEITSVORRICHTUNG FÜR GEPÄCK
DISPOSITIF DE SÉCURITÉ POUR BAGAGE

(30) Priority: 01.10.2019 GB 201914202
(43) Date of publication of application: 10.08.2022
(73) Proprietor: Parkins, John Peter, 30449 Hannover (DE)
(72) Inventor: Parkins, John Peter, 30449 Hannover (DE)
(74) Representative: Fry, David John
(86) International application number: PCT/GB2020/000077
(87) International publication number: WO 2021/064339

(56) References cited:
- WO-A1-2013/017179
- WO-A1-2018/115853
- US-A1- 2015 237 980
- US-A1- 2017 343 409

## Description

This invention relates to a security device and, more especially, this invention relates to a security device for luggage.

People travel by aircraft, ships, land vehicles and trains all over the world. Typically a person may have one, two or three items of luggage per journey. The luggage causes considerable problems for security personnel because there is always the possibility of the luggage containing explosive materials, drugs, contraband, excess customs-allowed items, and even prohibited food. Security checks vary in severity but they are never as good as would be desired. In particular, the security checks may not discover unallowable items and/or the security checks may cause passenger delay and frustration.

It is an aim of the present invention to reduce the above mentioned problems.

US 2015/237980 A1 discloses a device with a processor can be placed under the bag's handle, within an interior compartment of the bag, below or in the feet or wheels of the bag and/or the like.

Accordingly, in one embodiment of the present invention there is provided a security device for luggage, which security device comprises:
(i) attachment means for attaching the security device to hand grip means on the luggage;
(ii) memory means containing: (a) first contents data of an X-ray of the contents of the luggage at a time of a first departure;
   (b) second contents data of an X-ray of the contents of the luggage at a time of a second departure;
   (c) first weight data of the weight of the luggage at the time of the first departure;
   (d) second weight data of the weight of the luggage at the time of the second departure; and
(iii) global positioning system means for enabling the establishment of the position of the luggage, and the security device being such that:
(iv) the attachment means is constructed to go around the hand grip means and to remain permanently on the hand grip means;
(v) the first departure is a departure from a first departure point for a first journey, and the second departure is a second departure from a second departure point for a second journey;
(vi) the first contents data and the second contents data are for being compared in order to conduct a security check for anomalies between the contents of the luggage at the time of the first departure and the contents of the luggage at the time of the second departure;
(vii) the first weight data and the second weight data are for being compared in order to conduct a security check for anomalies between the weight of the luggage at the time of the first departure and the weight of the luggage at the time of the second departure; and
(viii) the global positioning system means enables the position of the luggage always to be established.

Typically, the first departure will be for an outward journey, and the second departure will be for a return journey. However, if desired the first departure may be for an outward journey, and the second departure may be for a further outward journey, for example in the case where a person with the luggage has to change aircraft, or to have overnight stop over. The first and second departures may thus be any combination of first and second departures depending upon the circumstances of the person travelling with the luggage.

A security check may typically be done on return to the first point of departure. However, the security check may be done at other points along a persons route after the first departure. The security check may typically be done by Customs officials at a point of entry into a country. The security checks may however be done by other authorised officials and/or at other positions as may be required. The security device of the present invention is able to be used by persons travelling with their luggage by aircraft, ships, land vehicles and trains. The security device may be used for any appropriate mode of travel, and where there needs to be a security check, for example at a Border Control or other area.

The security device of the present invention is advantageous in that it is able to provide accurate and speedy identification of persons and luggage arriving to and departing from individual countries. The security device is able to provide much more security than previously in the transportation and movement of passengers and luggage in terminals, for example aircraft terminals and train terminals. The security device is able to reduce on the very large amounts of money paid out each year by insurance companies dealing with claims on lost and stolen baggage. Further, the device is able to considerably reduce the time and effort of travel companies and other organisations having to auction off unclaimed luggage at auctions. The invention is further able to substantially reduce lost baggage which is never found, and thus not able to be returned to its owner and/or not able to be auctioned off.

The security device may be advantageous in the reduction of drugs smuggled out of countries, and especially countries well known for drug smuggling. The security device may be able to detect drugs in luggage that has been pre-prepared such as to avoid the drugs being found by normal security checks. The luggage is able to be checked twice, namely at the first departure and the second departure. This gives double security clearance. The device of the present invention may also be advantageous in the reduction of illegal movements by immigrants, especially those travelling with false passports and/or other identification papers.

Persons seeking to avoid discovery by travelling without luggage arouse suspicion due to the very fact that they are travelling without luggage. Thus if persons attempts to avoid detection by travelling without luggage, this itself becomes a suspicious feature indicating that something illegal is taking place.

The security device of the present invention is located on the hand grip means of the luggage. Thus the security device is on the outside of the luggage. The luggage may be any type of luggage and thus the luggage may be, for example, a suitcase, hand luggage, a briefcase, a bag, a rucksack or a backpack.

The construction of the hand grip means may depend upon the type of luggage. The hand grip means may be of any type of construction used on luggage. Thus, for example, the hand grip means may be a rigid or flexible handle of the type found on cases, or it may be a pair of flexible handles of the type found on bags, or it may be a closed loop strap of the type found on some rucksacks or backpacks. The hand grip means may be any type of construction enabling the luggage to be carried by a person, for example held in a person's hand, or carried over a person's shoulder. Often the luggage may have two or more hand grip means, and these hand grip means may be the same or different. If the luggage is such that it does have more than one of the hand grip means, then the security device can be attached to any one of the hand grip means or, alternatively, one of the security devices can be attached to each of the hand grip means.

The security device may include access means for enabling the memory means to be accessed, and the first and second contents data and the first and second weight data to be read from a remote station. The remote station may be the desk of a Customs official at a Border Control. With such access means, the security device is able to be in the form of a passive device which does not have to do anything. The information is in the memory means and it is able to be read remotely from the remote station.

Alternatively or additionally, the security device may include transmitter means for transmitting the first and second contents data and the first and second weight data to a remote station. In this case, the security device may be in the form of an active device which is actively transmitting. The security device may be configured to receive electrical power from at least one battery in order to enable the security device to transmit.

The security device may be one in which the security device is for locating at a base of the hand grip means and adjacent a body part of the luggage, and in which the security device includes position-sensing means for indicating if the security device has been moved from its required position adjacent the body part of the luggage. The required position may be, for example, a fixed position, or a movable position of only a predetermined distance, for example 12 - 15 cm from the body part of the luggage. With such a security device, the position-sensing means is able to stop persons trying to remove the handle from the luggage and attach the handle to very similar luggage but which contains forbidden substances such for example as explosives or drugs.

The security device may be one in which the attachment means comprises at least first and second parts which are constructed to go around the hand grip means and to be permanently attached to each other. The attachment means may comprise two parts, or three parts, or as many parts as may be required.

The first and second parts may be fastened together by security pins. The security pins may be constructed for avoiding the unauthorised opening of the first and second parts.

The security pins may be such that each security pin has a male member which extends into a female member, and thus prevents the first and second parts being separated. The male member is preferably a ball but other shaped male members may be employed.

The memory means may comprise a first part which contains first security information which is of a permanent nature and which is to remain permanently in the memory means, and a second part which contains second security information which is of a temporary nature and is of a type desired to be added, for example by authorised personnel such for example as by authorised travel personnel, and which is deleted at the end of the journey from the second departure point. Such second security information may be, for example, the departure and arrival times of an aircraft or train for a journey. By way of example it is mentioned that the security system may be such that the security device is read at a safe distance of from 50 - 80 metres. The reading of the security device is able to be done with a hand-held scanner, with the information then being able to be read out from an appropriate screen. The read-out may be able to indicate whether a security breach has occurred, whether a manipulation of the security device and/or the luggage has occurred, or whether someone has accidentally left their luggage alone and forgot to collect it. The information able to be obtained from the security device may be transmitted back to the hand held scanner and/or a separate security station. Security staff are able safely and accurately to determine what action should be taken, including which passenger should be informed over the telephone and what information should be stored in the security device or the entire security system.

The memory means may be such that it is able to receive any suitable and appropriate information including, for example, the colour of the luggage and/or the type of the luggage.

The security device may include smell-sensing means for sensing smells of products likely to be of a security interest. Thus, for example, the smell-sensing means may sense a smell of explosives or drugs. Often such smells are on the hands of the holder of the luggage.

The security device may be constructed to withstand shocks. This helps to avoid the security device inadvertently being damaged in transit, for example if it is dropped by baggage control personnel.

The security device may include tamper-evident means. The tamper- evident means may give evidence of tampering. The tamper-evident means may be arranged to provide a covert and silent input into the memory means. Thus anybody attempting to tamper with the security device will not immediately set off a noticeable alarm, which would warn the person doing the tampering that they have been discovered. However, authorised personnel reading the memory means, for example at a Border Control, would be able to obtain evidence of the tampering due to the covert and silent input into the memory means.

The tamper-evident means may be a light sensor which is in the security device and which reacts to light if the security device is opened. Other types of tamper-evident means may be employed.

The device of the present invention may utilise one or more radio frequency identification devices (RFID). The RFID devices may be active or passive devices. The active RFID devices may transmit and receive information, and thereby improve luggage handling, management and operations. The use of the RFID devices may facilitate making Resolution 753 an industry wide reality.

The device may include a clock, for example a digital clock. If the device of the present invention is in separate parts, then one or more of the parts may include the clock. The use of the clock, for example the digital clock, enables the capture of a time when something has happened to the security device and/or to the luggage. For example, the or each clock may indicate when something has been done to the security device and/or when the luggage has been opened by an unauthorised person.

The present invention also extends to luggage when provided with the security device. The present invention also extends to a security system when comprising the security device.

The security system may include remote reader means. The facility to read the memory means remotely may be especially advantageous in situations such for example as where the luggage may be suspected of containing a bomb. The ability to read the contents of the luggage remotely via the memory means may avoid the need for sudden evacuation of public places such for example as airports and railway stations, with the resulting inconvenience and disruption to passengers.

In use of the security device and the security system of the present invention, the security device will typically stay on the luggage or hand-held luggage, for example for use in an aeroplane. The security device may be a one piece security device or a multi-part security device, for example a two- part security device. On leaving a customs or control area when arriving back from a second departure, one part of the multi-part security device may be removed.

The security device may have a battery, for example like a watch battery, and the battery may have a long life. The use of the battery may enable the security device to have temporary information automatically removed. Thus the security device of the present invention can be used repeatedly for repeated journeys. The security device is preferably able to receive information, relay information and have information, for example temporary information, removed from it. The security device may include messaging information and vital statistics.

The security device may be a three-section security device. Where the security device has two or more sections, for example three sections, then there may be a battery in each section. One or more of the sections may also have a clock, for example a digital clock. This may enable the security device to indicate the time at which an unauthorised attempted manipulation of the security device took place.

The security device may operate using appropriate computer technical hardware and software. The security device may operate using digital technology, or any other suitable and appropriate technology.

The security device may be such that it not only receives information but that it also relays information. The received information may be that information that is programmed into the device. The relayed information may be what is required by security organisations in order to give good security.

By way of example, it is mentioned that the security device of the present invention may be used such that once a person has left a terminal, for example an airport terminal, then the luggage is taken with the person back to their home. Should the luggage be stolen or manipulated when not on a journey, the security device can still send information regarding the manipulation or the theft. The device can send this information automatically or when requested.

The GPS can be activated. At some time later, for example two months, the person may decide that they want to go on another journey. The person then packs their luggage and makes their way to the appropriate terminal, for example the airport terminal.

On arrival at the terminal, the luggage would be checked and the security device would be scanned. The passport photograph and other security information would be checked against the information held in the security device. This gives a form of double security.

Before the person's luggage has been weighed and before it has been X-rayed, the information may be taken for reference on the person's journey. The information may be given to a security device.

Temporary information for the luggage may be, for example, the weight taken and/or X-ray pictures. The information may be in digital or other format.

A barcode or barcodes may be employed for having quick access to temporary information. They may also be used for the second departure. Thus, at a second departure, the weight and X-ray photographs and other information may be added. Codes other than bar codes, for example quick read codes with symbols, may be employed.

For extra security of the luggage and/or the security device, a comparison may be taken with reference to the passport number of the person.

If the number in the passport does not match with the number in the security device, then the indications are that the passport is a fake.

Embodiments of the invention will now be described solely by way of example and with reference to the accompanying drawings in which:
Figure 1 shows a security device on luggage and in use; Figure 2 shows in detail a first type of security device;
Figure 3 is a top view of the security device shown in Figure 2 in an open condition;
Figure 4 shows the device of Figure 3 in a closed position;
Figure 5 shows a second security device;
Figure 6 is an exploded view from above and one side of a third security device;
Figure 7 is an exploded view of the security device shown in Figure 6 but from below and one side;
Figure 8 is a front view of the device as shown in Figures 6 and 7 and in a closed position;
Figure 9 shows another security device;
Figure 10 is an exploded view of the security device shown in Figure 9; Figure 11 is an exploded top view of the security device shown in Figure 9;
Figure 12 is a side view of the security device as shown in Figure 11; and
Figure 13 shows the construction of a preferred security pin for use in the security device of the present invention.

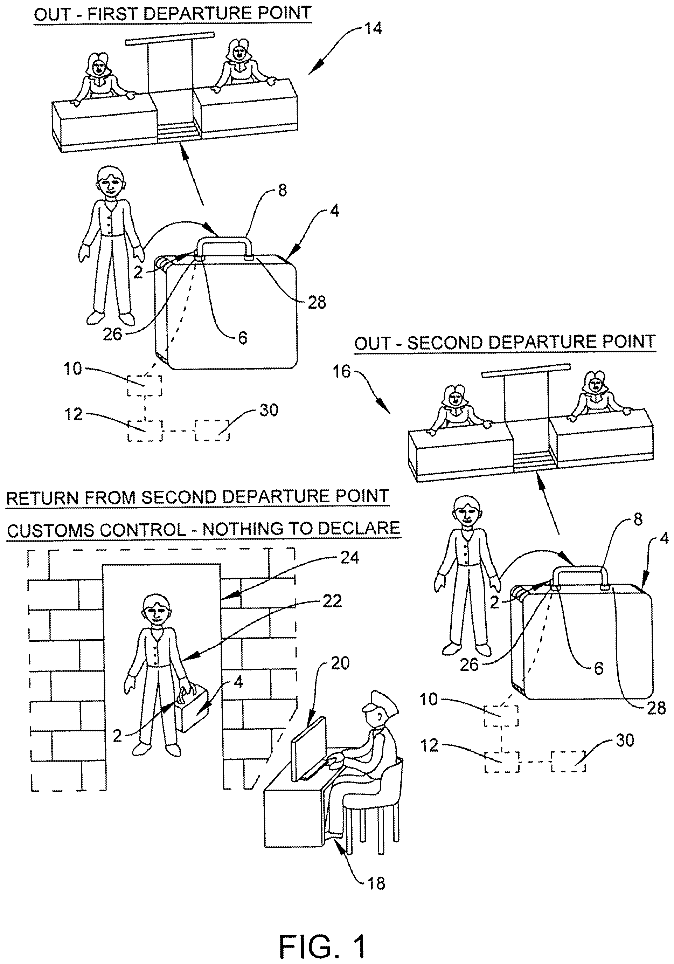

Referring to Figure 1, there is shown a security device 2 for luggage 4. The security device 2 comprises attachment means 6 for attaching the security device 2 to hand grip means 8 on the luggage 4.

The security device 2 also comprises memory means 10 containing first contents data of a X-ray of the contents of the luggage 4 at a time of a first departure, and second contents data of an X-ray of the contents of the luggage at the time of a second departure. The memory means 10 further contains first weight data of the weight of the luggage 4 at the time of the first departure, and second weight data of the weight of the luggage 4 at the time of the second departure.

The security device 2 further comprises global positioning system (GPS) means 12 for enabling the establishment of the position of the luggage 4. The security device 2 is such that the attachment means 6 is constructed to go around the hand grip means 8 and to remain permanently on the hand grip means 8.

The first departure is a departure from a first departure point 14, typically the departure desk in an airport terminal as shown in Figure 1. The second departure is a departure from a second departure point 16 for a second journey, typically the departure desk in an airport terminal as shown in Figure 1, and for making a return journey to the airport of the first departure.

The first contents data and the second contents data are for being compared in order to conduct a security check for anomalies between the contents of the luggage 4 at the time of the first departure and the contents of the luggage 4 at the time of the second departure. Similarly, the first weight data and the second weight data are for being compared in order to conduct a security check for anomalies between the weight of the luggage 4 at the time of the first departure and the weight of the luggage 4 at the time of the second departure. Figure 1 shows the security checks being made by a Customs official 18 on a reader 20 as a passenger 22 passes through Customs Control 24, and which is entitled "nothing to declare".

As shown in Figure 1, the security device 2 is located at a base 26 of the hand grip means 8, and adjacent a body part 28 of the luggage 4. The security device 2 includes position-sensing means 30 for indicating if the security device 2 has been moved from its position adjacent the body part 28 of the luggage 4.

In Figure 1, the hand grip means 8 has been shown as a simple rigid handle. This is for simplicity of illustration only. The hand grip means may be of any type and construction, including rigid constructions and flexible constructions. Similarly, the luggage 4 has been shown for illustrative purposes only as a simple case. The luggage 4 may be any type of luggage, including cases of other designs, bags, rucksacks and backpacks. Depending upon the type of luggage, there may be two or more hand grip means, and these hand grip means may be the same or different, and of any construction suitable for the type of luggage in question.

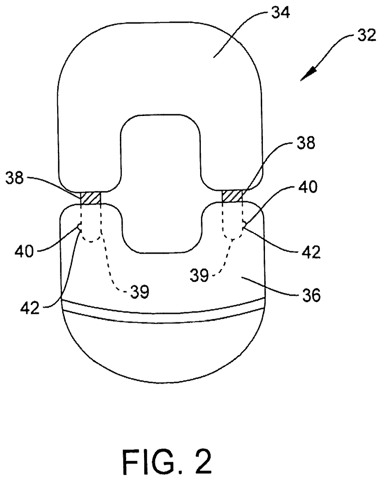

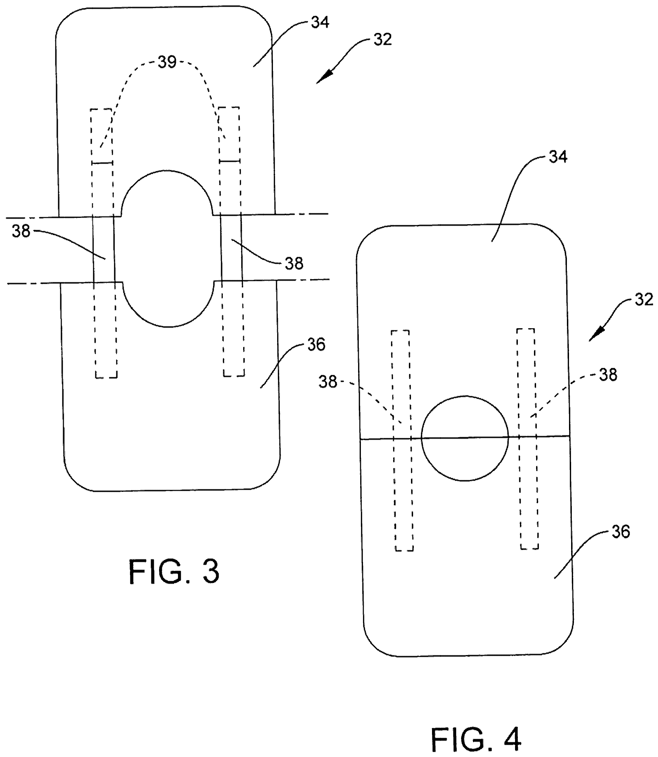

Referring to Figures 2, 3 and 4 there is shown a two-part security device 32 comprising a first part 34 and a second part 36. The first and second parts

34, 36 are secured together by security pins 38 locating in bores 39. Each security pin 38 has a male member in the form of a ball 40 which locates in a female member in the form of a recess 42. The first part 34 has the security pins 38, and the second part 36 has the recesses 42 for the balls 40. Once the balls 40 are in their recesses 42, it is not normally possible to separate the first and the second parts 34, 36. in use, the security device 32 may be fixed to hand luggage. Data information may be provided to the first part 34 as temporary information. The second part 36 may also be provided with temporary information. The temporary information may be deleted as and when appropriate bearing in mind security considerations. Thus, for example, the temporary information may be removed only when a person's passport and security information have been proofed and cleared. Temporary information may be transferred between different parts of the multi-part security devices of the present invention and/or between different items of luggage. The transfer may be effected, for example, by way of a scanner, and then using a barcode or a combination of barcodes.

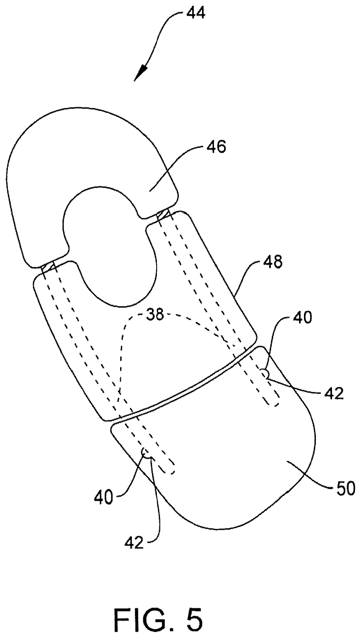

Figure 5 shows a three-part security device 44 comprising a first part 46, a second part 48 and a third part 50. The first, second and third parts 46, 48, 50 are shown connected together by security pins 38.

In the security device 44, the first part 46 contains first security information. In various use situations, this first security information may be of a permanent nature and of a type which is to remain permanently in the memory means. The third part 50 may contain second security information which is of a temporary nature, and which is of a type desired to be added by authorised travel personnel. This second security information may be deleted at the end of a journey from the second departure point. In a modification of the invention, the first and second types of security information may be contained in memory means in a single part of the security device 44 rather than in two parts 46, 50.

Alternatively, if the security device is a one-piece security device, then the first and second types of security information may be contained in the one-piece security device. The security device 44 may contain smell-sensing means for sensing smells of products likely to be of a security interest. Typically such products are the smells of explosives and drugs.

The security device 44 shown in Figure 5 may operate as in the following examples.

### EXAMPLE 1

The third part 50 of the security device 44 may detect manipulation from the sensor 2. The information may be sent back to a security station in real time as and when the manipulation occurs. The sensor 2 detects the opening of the luggage in the terminal, for example an airport terminal or a station terminal.

Obtained information may indicate:
(a) the theft from personal belongings.
(b) the placing of an explosive device, drugs or other prohibited goods by a member of the airport staff at the second departure.
(c) the removal of an object or objects from the luggage during an incoming journey, for example an incoming flight in the case of aircraft.

### EXAMPLE 2

Known persons such for example one or more terrorists or one or more criminals are known to be travelling by aircraft, train or ship, but the information of their whereabouts is given out too late. Alternatively, a terrorist incident happens, and the individual or individuals go on the run.

Alternatively, the identification of the suspect or suspects becomes known, for example from closed circuit television cameras. However the suspect or suspects may have attempted to leave the country or have left.

In the above circumstances, travelling without baggage at a terminal, for example an airport terminal or a shipping terminal, will attract attention. If travelling with the baggage, the suspect or suspects will need to de-activate the security device.

If it should be known that luggage has been taken by the suspect or suspects, the suspect or suspects are able to be tracked using GPS.

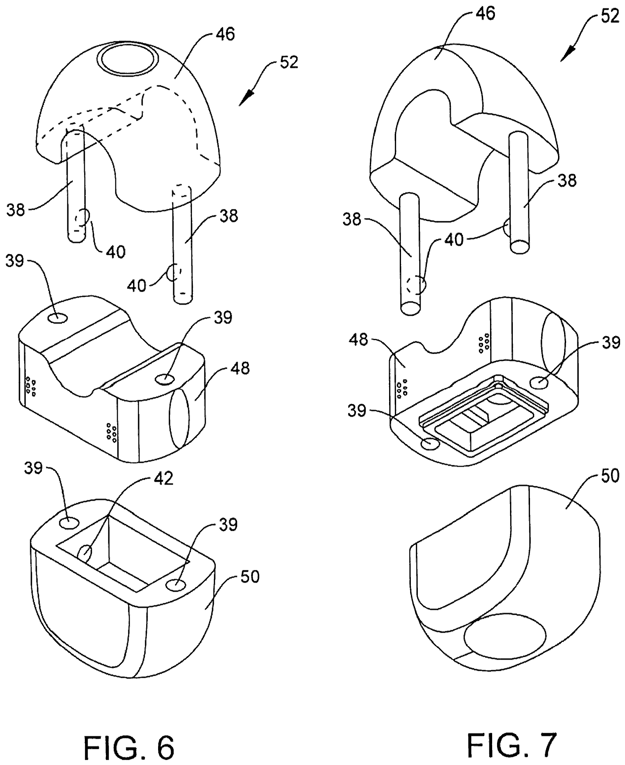

Referring now to Figures 6, 7 and 8, there is shown a security device 52. The security device 52 is like the security device 44 and similar parts have been given the same reference numerals for ease of comparison and understanding. The security device 52 may be such that the memory means 10 includes extra information such for example as a photograph of a person the holding of the luggage, the person's passport number, their address, their mobile telephone number, their house number, and the details of a friend or relative in the case of an accident. One or more of these pieces of information may be provided.

In use, the security device 52 may be such that the first part 46 receives information of a permanent nature, and the second part 48 receives information of a temporary nature. The third part 50 may contain first and second sensors.

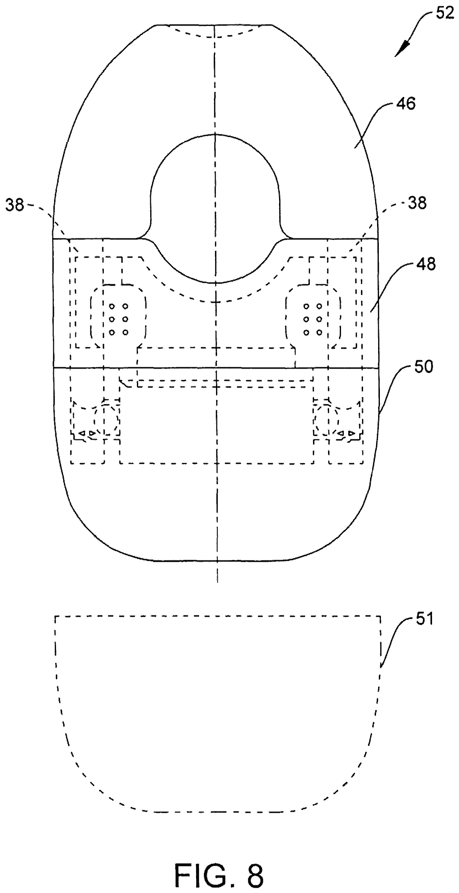

In a modification of the invention as shown only in Figure 8, a dummy fourth section 51 may be provided. The dummy section 51 may be attached after the temporary information has been removed from the second part 48. The dummy section 51 may cover the third part 50 with its first and second sensors. The first and second sensors will typically remain in the third part 50. In some embodiments of the security device 52, the dummy section 51 may be exchanged with the third part 50, and then the sensors 1 and/or 2 in the third part 50 may be activated for other uses.

The first sensor may be used to detect when hand grip means such for example as a handle or a strap are removed from the luggage. The second sensor may be used to detect when the luggage has been legitimately opened, and thus any information needing to be deleted can then be deleted.

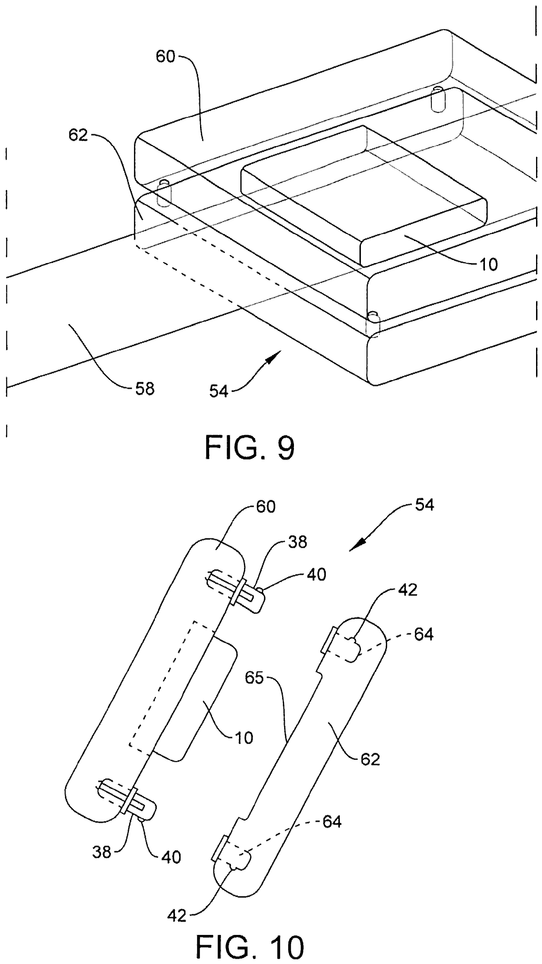

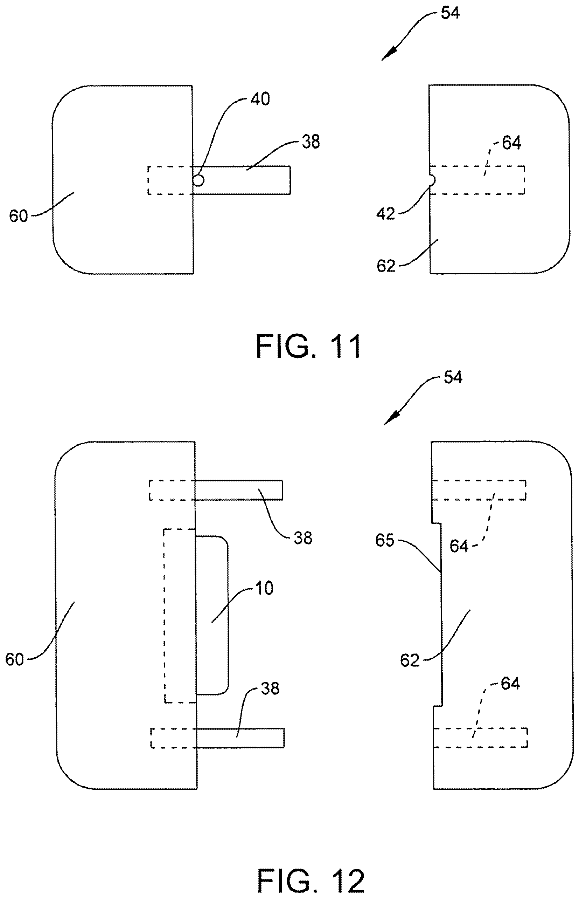

Figures 9-12 show a security device 54 which is for fitting on hand grip means in the form of a strap 58. The security device 54 comprises a first part 60 and a second part 62. The first part 60 has security pins 38. The second part 62 has bores 64, and the bores 64 have the recesses 42. The memory means 10 is received in a recess 65 in the second part 62.

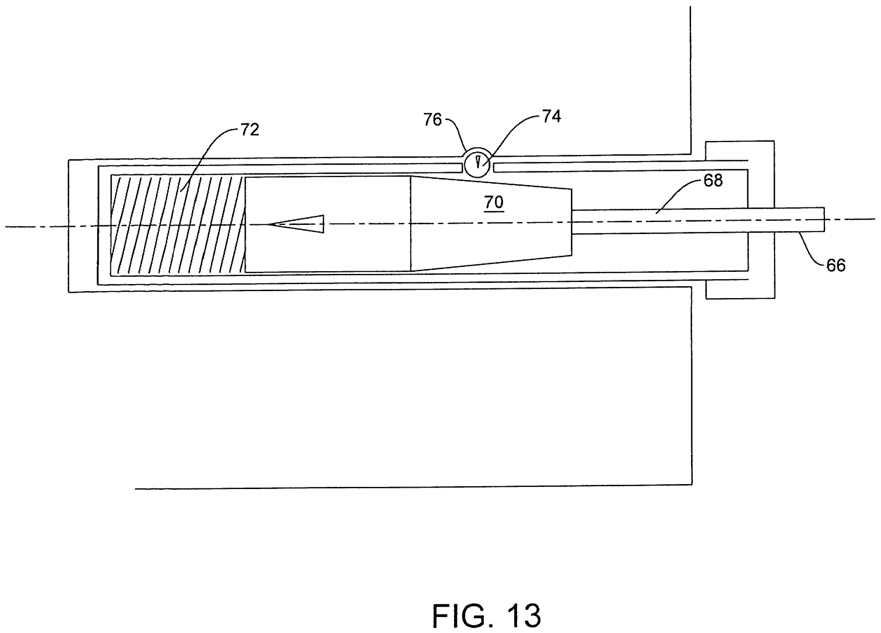

Figure 13 shows in enlarged view a security pin 66 having a shank 68 and a body portion 70. A spring 72 presses against one end of the body portion 70 as shown. A ball 74 locates in a recess 76. The device shown in Figure 13 is able to form all or part of the attachment means for attaching a security device of the present invention to hand grip means on an item of luggage.

The security device and the security system of the present invention may operate as follows for a return from a journey. 1. A person takes the luggage with the security device through customs control. The person has the choice of using the "nothing to declare" route, or the "anything to declare" route.

2. The security device is scanned. When the scanning indicates that everything is satisfactory, then the security device is deactivated.

3. Consequent upon the security device being scanned and an indication that everything is satisfactory being obtained, all information of a temporary nature would be deleted. Examples of such temporary information are as follows:
(a) departure and arrival.
(b) times and schedules from aircraft.
(c) X-ray photographs (digital) of the first departure.
(d) X-ray photographs (digital) of the second departure.
(e) weight taken at the time of the first departure.
(f) weight taken at the time of the second departure.
(g) barcode information.
(h) terminal information on co-ordination and direction of baggage to individual flights to which the baggage is destined. The security device may be watched over by airport terminal sensors, which direct and co-ordinate luggage to correct flights without the luggage being transferred to an incorrect flight, or the baggage simply being left behind and not put on the correct flight.
(i) comments and remarks with reference to transit flights, changing from one aircraft to another, and without using an airport terminal.

The information of the temporary nature may be secured for the duration of a journey by appropriate information protecting means such for example as by a barcode or by a barcode combination. Other information protecting means for protecting the information that is temporarily stored can be employed. The removal of the temporary information may take place as and when desired, for example when the luggage of the person is scanned and deactivated, or at some predetermined convenient time on the arrival of the person back from the second departure.

The security device of the present invention is easily fitted to the outside of the luggage. It provides increased security over that currently available. In particular, it is able to provide two pieces of contents information and two pieces of weight information. The position of the luggage is always known at any one time due to the presence of the GPS. The memory means can be read remotely which enables fast scanning of the luggage. This in turn helps to avoid queues of passengers. It also helps to avoid terminal evacuation in the event of a bomb scare.

A further advantage of the present invention relates to the fact that people often make claims that the contents of their luggage have been damaged during transit, or have been stolen. The X-rays of the contents of the luggage at the time of the first departure and at the time of the second departure may help to avoid fraudulent claims because the contents of the luggage will be seen.

The presence of the GPS means ensures that the whereabouts of the luggage is always known. This avoids lost luggage and the need to sell off luggage after it has been stored for some time and not claimed. These are all costs that have to be borne by an airline or other travel organisation. The GPS may also be very advantageous in the case of use on aircraft where there is an accident and/or the aircraft has disappeared from radar. After such types of incident, it is often very difficult to find the aircraft, especially if the aircraft has disappeared over the sea. Often the main objects that are found are pieces of luggage of passengers. With the device of the present invention, the luggage could be found, thereby leading to the finding of the remains of the entire aircraft. This may be especially advantageous if the aircraft is lost by the deliberate action of the aircraft captain or one of the aircraft crew. Also, the device may be very advantageous in the case of the aircraft being lost as a result of an explosion, over land or water, but with the explosion being such that the aircraft is scattered over a large area. Luggage scattered over a large area would always able to be detected with the use of the device and the GPS. Photographs of passports and pictures of holders may help to prevent people using different passports to gain entry into a country with different types of luggage containing illegal substances. The security device may ensure that people are only allowed to go on a journey if the photograph in the memory means is the same as the actual person's face. There is no great incentive to tamper with the security device because the memory means can be accessed remotely, and the information in the memory means can also be held in the memory means at a remote control place, for example in an airport.

Embodiments of the invention may be such that the security device is able to operate as follows.
(a) receive input information.
(b) call up information.
(c) read information.
(d) hold information.
(e) automatically inform of a security breach of the security device.
(f) use GPS or other means to give the position of the security device. This may be especially advantageous in the case of use of the device on an aircraft, and where the aircraft has disappeared from radar. (g) movement of the security device in the case of a suspected terrorist or criminal, with GPS being activated.
(h) give information by call-up, for example giving the weight difference or X-ray information.
(i) transmit information such as to allow a passenger to proceed through a customs or other check-point without being stopped or checked, whereby enforcement officers such for example as drug enforcement officers are able to take over surveillance with a view to apprehending an entire criminal gang rather than just one member of the criminal gang.

The security device may be called Informer or Safe Guard.

## Claims

1. A security device (2) for luggage (4), which security device comprises:
(i) attachment means (6) for attaching the security device to hand grip means (8) on the luggage;
(ii) memory means (10) containing:
(a) first contents data of an X-ray of the contents of the luggage at a time of a first departure;
(b) second contents data of an X-ray of the contents of the luggage at a time of a second departure;
(c) first weight data of the weight of the luggage at the time of the first departure;
(d) second weight data of the weight of the luggage at the time of the second departure; and
(iii) global positioning system means (12) for enabling the establishment of the position of the luggage, and the security device being such that:
(iv) the attachment means is constructed to go around the hand grip means and to remain permanently on the hand grip means;
(v) the first departure is a departure from a first departure point (14) for a first journey, and the second departure is a departure from a departure point (16) for a second journey;
(vi) the first contents data and the second contents data are for being compared in order to conduct a security check for anomalies between the contents of the luggage at the time of the first departure and the contents of the luggage at the time of the second departure;
(vii) the first weight data and the second weight data are for being compared in order to conduct a security check for anomalies between the weight of the luggage at the time of the first departure and the weight of the luggage at the time of the second departure; and
(viii) the global positioning system means enables the position of the luggage always to be established.

2. A security device according to claim 1 and including access means for enable the memory means to be accessed, and the first and second contents data and the first and second weight data to be read from a remote station.

3. A security device according to claim 1 and including transmitter means for transmitting the first and the second contents data and the first and the second weight data to a remote station.

4. A security device according to any one of the preceding claims in which the security device is for locating at a base (26) of the hand grip means and adjacent a body part (28) of the luggage, and in which the security device includes position-sensing means (30) for indicating if the security device has been moved from its required position adjacent the body part of the luggage.

5. A security device according to any one of the preceding claims in which the attachment means comprises at least first and second parts (34, 36) which are constructed to go around the hand grip means and be permanently attached to each other.

6. A security device according to claim 5 in which the first and second parts are fastened together by security pins (38).

7. A security device according to claim 6 in which each of the security pins has a male member which extends into a female member and thus prevents the first and second parts being separated.

8. A security device according to claim 7 in which the male member is a ball (40).

9. A security device according to any one of the preceding claim in which the memory means comprises a first part which contains first security information which is of a permanent nature and which is to remain permanently in the memory means, and a second part which contains second security information which is of a temporary nature and which is of a type desired to be added by authorised travel personnel and which is deleted at the end of the journey from the second departure point.

10. A security device according to any one of the preceding claims and including smell-sensing means for sensing smells of products likely to be of a security interest.

11. A security device according to any one of the preceding claim and including tamper-evident means.

12. A security device according to claim 11 in which the tamper-evident device is a light sensor which is in the security device and which reacts to light if the security device is opened.

13. Luggage when containing a security device according to any one of the preceding claims.

## Patentansprüche

1. Sicherheitsvorrichtung (2) für Gepäck (4), wobei die Sicherheitsvorrichtung Folgendes umfasst:
(i) ein Anbringungsmittel (6) zum Anbringen der Sicherheitsvorrichtung an einem Handgriffmittel (8) an dem Gepäck,
(ii) ein Speichermittel (10), das Folgendes enthält:
(a) erste Inhaltsdaten einer Röntgenaufnahme des Inhalts des Gepäcks zu einem Zeitpunkt einer ersten Abreise;
(b) zweite Inhaltsdaten einer Röntgenaufnahme des Inhalts des Gepäcks zu einem Zeitpunkt einer zweiten Abreise;
(c) erste Gewichtsdaten bezüglich des Gewichts des Gepäcks zu dem Zeitpunkt der ersten Abreise;
(d) zweite Gewichtsdaten bezüglich des Gewichts des Gepäcks zu dem Zeitpunkt der zweiten Abreise; und
(iii) ein Mittel (12) eines globalen Positionsbestimmungssystems, um die Ermittlung der Position des Gepäcks zu ermöglichen, und wobei die Sicherheitsvorrichtung derart beschaffen ist, dass:
(iv) das Anbringungsmittel so konstruiert ist, dass es um das Handgriffmittel herum passt und dauerhaft an dem Handgriffmittel verbleibt;
(v) die erste Abreise eine Abreise von einem ersten Abreiseort (14) für eine erste Reisestrecke ist und die zweite Abreise eine Abreise von einem Abreiseort (16) für eine zweite Reisestrecke ist;
(vi) die ersten Inhaltsdaten und die zweiten Inhaltsdaten zum Vergleichen bestimmt sind, um eine Sicherheitsüberprüfung auf Anomalien zwischen dem Inhalt des Gepäcks zu dem Zeitpunkt der ersten Abreise und dem Inhalt des Gepäcks zu dem Zeitpunkt der zweiten Abreise durchzuführen;
(vii) die ersten Gewichtsdaten und die zweiten Gewichtsdaten zum Vergleichen bestimmt sind, um eine Sicherheitsüberprüfung auf Anomalien zwischen dem Gewicht des Gepäcks zu dem Zeitpunkt der ersten Abreise und dem Gewicht des Gepäcks zu dem Zeitpunkt der zweiten Abreise durchzuführen; und
(viii) das Mittel eines globalen Positionsbestimmungssystems ermöglicht, dass die Position des Gepäcks jederzeit ermittelt wird.

2. Sicherheitsvorrichtung nach Anspruch 1, und beinhaltend ein Zugriffsmittel, um den Zugriff auf das Speichermittel und das Lesen der ersten und zweiten Inhaltsdaten und der ersten und zweiten Gewichtsdaten von einer entfernten Station zu ermöglichen.

3. Sicherheitsvorrichtung nach Anspruch 1, und beinhaltend ein Übertragungsmittel zum Übertragen der ersten und zweiten Inhaltsdaten und der ersten und zweiten Gewichtsdaten an eine entfernte Station.

4. Sicherheitsvorrichtung nach einem der vorhergehenden Ansprüche, bei der die Sicherheitsvorrichtung zum Anordnen an einer Basis (26) des Handgriffmittels und benachbart zu einem Hauptteil (28) des Gepäcks bestimmt ist und bei der die Sicherheitsvorrichtung ein Positionssensormittel (30) beinhaltet, um anzugeben, ob die Sicherheitsvorrichtung aus ihrer erforderlichen Position benachbart zu dem Hauptteil des Gepäcks bewegt wurde.

5. Sicherheitsvorrichtung nach einem der vorhergehenden Ansprüche, bei der das Anbringungsmittel mindestens einen ersten und zweiten Teil (34, 36) umfasst, die so konstruiert sind, dass sie um das Handgriffmittel herum passen und dauerhaft aneinander angebracht sind.

6. Sicherheitsvorrichtung nach Anspruch 5, bei welcher der erste und zweite Teil durch Sicherheitsstifte (38) aneinander befestigt sind.

7. Sicherheitsvorrichtung nach Anspruch 6, bei der jeder der Sicherheitsstifte ein männliches Element aufweist, das sich in ein weibliches Element erstreckt und somit verhindert, dass der erste und zweite Teil getrennt werden.

8. Sicherheitsvorrichtung nach Anspruch 7, bei der das männliche Element eine Kugel (40) ist.

9. Sicherheitsvorrichtung nach einem der vorhergehenden Ansprüche, bei der das Speichermittel einen ersten Teil, der erste Sicherheitsinformationen enthält, die dauerhafter Natur sind und dazu bestimmt sind, dauerhaft in dem Speichermittel zu verbleiben, und einen zweiten Teil umfasst, der zweite Sicherheitsinformationen enthält, die temporärer Natur sind und von einer Art sind, von der gewünscht wird, dass sie von autorisiertem Reisepersonal hinzugefügt wird, und der am Ende der Reisestrecke von dem zweiten Abreiseort gelöscht wird.

10. Sicherheitsvorrichtung nach einem der vorhergehenden Ansprüche, und beinhaltend ein Geruchssensormittel zum Erfassen von Gerüchen von Produkten, bei denen es wahrscheinlich ist, dass ein Sicherheitsinteresse besteht.

11. Sicherheitsvorrichtung nach einem der vorhergehenden Ansprüche, und beinhaltend ein Manipulationssicherungsmittel.

12. Sicherheitsvorrichtung nach Anspruch 11, bei der die Manipulationssicherungsvorrichtung ein Lichtsensor ist, der sich in der Sicherheitsvorrichtung befindet und auf Licht reagiert, wenn die Sicherheitsvorrichtung geöffnet wird.

13. Gepäck, das eine Sicherheitsvorrichtung nach einem der vorhergehenden Ansprüche enthält.

## Revendications

1. Dispositif de sécurité (2) pour bagage (4), lequel dispositif de sécurité comprend :
(i) un moyen de fixation (6) destiné à fixer le dispositif de sécurité à un moyen de poignée (8) sur le bagage ;
(ii) un moyen de mémoire (10) contenant :
(a) des premières données de contenu d'une radiographie du contenu du bagage au moment d'un premier départ ;
(b) des secondes données de contenu d'une radiographie du contenu du bagage au moment d'un second départ ;
(c) des premières données de poids du poids du bagage au moment du premier départ ;
(d) des secondes données de poids du poids du bagage au moment du second départ ; et
(iii) un moyen de système de positionnement global (12) destiné à permettre l'établissement de la position du bagage, et le dispositif de sécurité étant tel que :
(iv) le moyen de fixation est construit de manière à faire le tour du moyen de poignée et de manière à rester en permanence sur le moyen de poignée ;
(v) le premier départ est un départ d'un premier point de départ (14) pour un premier voyage, et le second départ est un départ d'un point de départ (16) pour un second voyage ;
(vi) les premières données de contenu et les secondes données de contenu sont destinées à être comparées afin d'effectuer un contrôle de sécurité pour déceler des anomalies entre le contenu du bagage au moment du premier départ et le contenu du bagage au moment du second départ ;
(vii) les premières données de poids et les secondes données de poids sont destinées à être comparées afin d'effectuer un contrôle de sécurité pour déceler des anomalies entre le poids du bagage au moment du premier départ et le poids du bagage au moment du second départ ; et
(viii) le moyen de système de positionnement global permet de toujours établir la position du bagage.

2. Dispositif de sécurité selon la revendication 1 et comprenant un moyen d'accès destiné à permettre l'accès au moyen de mémoire et la lecture des première et seconde données de contenu et des premières et secondes données de poids à partir d'un poste distant.

3. Dispositif de sécurité selon la revendication 1 et comprenant un moyen émetteur destiné à transmettre les premières et secondes données de contenu et les premières et secondes données de poids à un poste distant.

4. Dispositif de sécurité selon l'une quelconque des revendications précédentes, ledit dispositif de sécurité étant destiné à être placé au niveau d'une base (26) du moyen de poignée et à proximité d'une partie de corps (28) du bagage, et ledit dispositif de sécurité comprenant un moyen de détection de position (30) destiné à indiquer si le dispositif de sécurité a été déplacé de sa position requise à proximité de la partie de corps du bagage.

5. Dispositif de sécurité selon l'une quelconque des revendications précédentes, ledit moyen de fixation comprenant au moins une première et une seconde partie (34, 36) qui sont construites de manière à faire le tour du moyen de poignée et être fixées de manière permanente l'une à l'autre.

6. Dispositif de sécurité selon la revendication 5, lesdites première et seconde parties étant fixées ensemble par des broches de sécurité (38).

7. Dispositif de sécurité selon la revendication 6, chacune des broches de sécurité possédant un élément mâle qui s'étend dans un élément femelle et empêche ainsi la séparation des première et seconde parties.

8. Dispositif de sécurité selon la revendication 7, ledit élément mâle étant une boule (40).

9. Dispositif de sécurité selon l'une quelconque des revendications précédentes, ledit moyen de mémoire comprenant une première partie qui contient des premières informations de sécurité qui sont de nature permanente et qui doivent rester en permanence dans le moyen de mémoire, et une seconde partie qui contient des secondes informations de sécurité qui sont d'un caractère temporaire et qui sont d'un type souhaité de manière à être ajoutées par le personnel de voyage habilité et qui sont supprimées à la fin du voyage à partir du second point de départ.

10. Dispositif de sécurité selon l'une quelconque des revendications précédentes et comprenant un moyen de détection d'odeurs destiné à détecter les odeurs de produits susceptibles d'être d'intérêt en matière de sécurité.

11. Dispositif de sécurité selon l'une quelconque des revendications précédentes et comprenant un moyen de révélation d'effraction.

12. Dispositif de sécurité selon la revendication 11, ledit dispositif de révélation d'effraction étant un capteur de lumière qui se trouve dans le dispositif de sécurité et qui réagit à la lumière si le dispositif de sécurité est ouvert.

13. Bagage lorsqu'il contient un dispositif de sécurité selon l'une quelconque des revendications précédentes.
